# EUROPEAN PATENT SPECIFICATION

(11) **EP 3 038 955 B1**
(45) Date of publication and mention of the grant of the patent: **18.10.2017**
(21) Application number: 14780608.7
(22) Date of filing: 29.08.2014
(51) Int. Cl.: B27M 3/00, B65G 47/54, B23P 21/00, E04C 2/24, B65G 47/31, B65G 47/90

(54) **APPARATUS AND METHOD TO MAKE PANELS**
VORRICHTUNG UND VERFAHREN ZUM HERSTELLEN VON PLATTEN
DISPOSITIF ET APPAREIL POUR LA FABRICATION DE PANNEAUX

(30) Priority: 30.08.2013 IT UD20130112
(43) Date of publication of application: 06.07.2016
(73) Proprietor: Prisma S.r.l., 33078 San Vito al Tagliamento (PN) (IT)
(72) Inventor: PELLEGRINI, Gian Luca, I-33080 Fiume Veneto (IT)
(74) Representative: Petraz, Gilberto Luigi
(86) International application number: PCT/IB2014/064152
(87) International publication number: WO 2015/028984

(56) References cited:
- WO-A2-92/12835
- DE-A1- 2 061 818
- DE-A1- 3 804 703
- DE-A1-102009 004 682
- US-A- 3 897 620

## Description

### FIELD OF THE INVENTION

The present invention concerns an apparatus to make panels according to the preamble of claim 1 and a method for making a panel according to the preamble of claim 17. Such an apparatus is disclosed in document DE 20 61 818 A and such a method is disclosed in document DE 10 2009 004682 A. In particular, the present invention is usable, preferably but not exclusively, to make hollow-core panels, applicable in the furnishing sector to obtain, once finished, furnishing components, such as doors for example, or panels or sides for furniture.

### BACKGROUND OF THE INVENTION

In the furnishing sector, it is known to use multi-layered panels to make furnishing components such as doors for example, or panels or sides for furniture.

These multi-layered panels, advantageously lighter than panels made entirely of solid wood, can have a so-called "hollow-core" structure, that is, defined by two external layers located parallel with respect to each other and defining the external surfaces of the panel.

The external layers, in their turn, are glued on one side and the other on a frame defining the thickness of the panel and one or more hollows in which one or more filling bodies with a cell-like structure are disposed.

The filling bodies with cell-like structure increase the resistance of the panel and can be made, for example, with paper impregnated and structured in cells, pressed cardboard, polyurethane, polystyrene or similar materials.

The frame comprises a plurality of oblong structural elements, usually strips, glued on the surface that during use is internal of the external layers and define therewith one or more hollows in which to dispose the internal filling body or bodies.

The strips can be applied in correspondence to the perimeter portions of the external layers so as to define themselves the perimeter edges of the panel.

Some solutions can provide to apply the strips also in central positions of the external layers, in order to increase the structural resistance of the panel.

The strips can be of different widths, also depending on the structural resistance required for the particular type of application of the panel.

The operations to assemble known panels usually provide the manual gluing of the strips, in predefined positions, and on a surface of one of the external layers. Then the filling bodies are disposed in the hollows defined between the strips and the external layer, and subsequently the other external layer is applied, by gluing, in order to close the filling bodies between the two layers and define the panel.

These operations are currently carried out manually and require the use of specialized operators.

Moreover, these operations are particularly time-consuming, so that it is not possible to achieve high productivity.

An apparatus to manipulate construction elements such as bricks is known in the building sector, described in document DE-A-20.61.818 and is suitable to transfer rows of bricks from a first station to a second station.

The first station, or pick-up station, is made up of two tracks, or supports, on each of which a plurality of bricks is positioned, distanced and aligned in succession with respect to each other.

The second station, or delivery station, is located below the first station and consists of a slider sliding on guides in a transverse direction with respect to the orientation of the lines of bricks present on the tracks of the first station.

The slider is provided with a support plane on which the lines of bricks picked up from each of the tracks of the first station are positioned parallel to each other.

The known apparatus described in DE-A-20.61.818 also comprises a gripping and delivery unit mobile between the first station and the second station in order to transfer the rows of bricks.

The gripping unit comprises a single gripping head installed on a gate structure. The gate structure, by means of suitable movement means, moves the gripping head between one of the tracks of the first station and the second station in order to position the rows of bricks on the support plane of the slider.

The gripping head is provided with a plurality of grippers installed in a reciprocally fixed position and aligned with each other parallel to the orientation of the tracks of the first station.

Each of the grippers is configured to take one of the bricks of the row with a specific gripping action and guarantee the security of the grip and transfer of each brick.

Once a first row of bricks has been deposited, the slider of the second station is moved to dispose the free portion of its support plane in a suitable position to receive another row of bricks.

The reciprocal positioning of the rows of bricks that are positioned on the slider is therefore defined both by the movement of the gripping head that is determined by the gate structure and also by the movement of the slider along the guides.

This solution, however, is particularly complex to achieve and is difficult to implement for the production of panels of the present invention. In particular, with the known apparatus described above it is not possible to transfer several rows of bricks in a parallel condition with respect to each other in order to dispose them simultaneously on the support plane of the slider in pre-established positions.

Moreover, the need to move both the gripping head and the slider to define the reciprocal positioning of the rows of bricks in the second station causes an imprecise positioning of the bricks on the support plane which, if it may be accepted in the building trade, in the field of the production of panels is totally unacceptable since it causes discards of the panel.

It is also known, from DE-A-10.2009.004682, a method for separating flat strips for producing intermediate ply of parquet floor.

One purpose of the present invention is to produce an apparatus to make panels that allows to simplify the production operations and allow the production with high quality standards.

Another purpose of the present invention is to make an apparatus to produce panels that allows to speed up the production times of a panel.

It is also a purpose of the present invention to reduce, and potentially eliminate, the intervention of operators in the production of a panel.

Another purpose is to perfect a method for the production of panels that is simple and rapid.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

The present invention concerns an apparatus for making a panel comprising at least an external layer on which structural elements with an oblong development are disposed, distanced from each other at pre-established distances.

In accordance with forms of embodiment of the present invention, the apparatus comprises:
- a preparation unit provided to divide the structural elements, distancing them from each other;
- an assembly unit on which to dispose the external layer during use;
- a gripping and delivery unit, mobile between the preparation unit and the assembly unit and comprising a plurality of gripping units each of which is configured to pick up at least one of the structural elements from the preparation unit and to deliver the structural elements to the assembly unit, disposing them on the external layer distanced from each other at the pre-established distances.

In accordance with another aspect of the invention, the gripping and delivery unit also comprises positioning members provided to move the gripping units reciprocally nearer/away from each other so as to distance the gripping units in a precise and predefined manner with respect to each other and to define the pre-established distances between the structural elements.

This allows to achieve an apparatus for producing panels which is extremely simple and rapid and allows to automate the production of panels.

Moreover, the presence of the positioning members, associated directly to the gripping units, allows to define precisely and accurately the reciprocal positioning of the structural elements. This allows to obtain panels of high dimensional quality and to reduce rejects.

The present invention also concerns a method for producing a panel.

In accordance with possible formulations of the invention, the method comprises:
- preparing the structural elements by a preparation unit that provides to separate and divide the structural elements with respect to each other;
- disposing the external layer on an assembly unit;
- picking up the structural elements from the preparation unit and delivering them to the assembly unit by means of a plurality of gripping units of a gripping and delivery unit, disposing the structural elements on the external layer distanced from each other at the pre-established distances.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a perspective view of an apparatus to make panels in accordance with the present invention;
- fig. 2 is a section view of a panel made with an apparatus and a method according to the present invention;
- fig. 3 is a plan view of an apparatus in accordance with possible forms of embodiment;
- fig. 4 is a front view of fig. 3;
- fig. 5 is an enlarged perspective view of a part of the apparatus in fig. 1;
- fig. 6 is an enlarged perspective view of another part of the apparatus in fig. 1;
- fig. 7 is an enlarged detail of a part of fig. 6;
- fig. 8 is another enlarged detail of a part of fig. 6;
- fig. 9 is an enlarged detail of fig. 4;
- fig. 10 is an enlarged detail of fig. 9;
- fig. 11 is a view from below of a detail of fig. 10 in a first operating condition;
- fig. 12 is a view of the detail of fig. 11 in a second operating condition;

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME FORMS OF EMBODIMENT

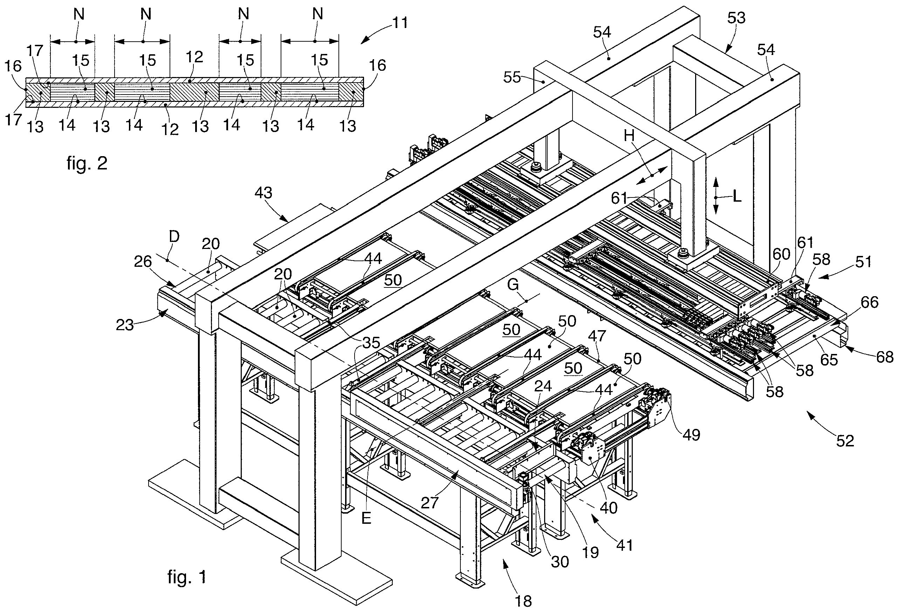

With reference to fig. 1, an apparatus for making panels is indicated in its entirety by the reference number 10 and is used to make at least one panel 11 (fig. 2), preferably but not exclusively with a hollow-core structure.

An example of a panel 11 made with the apparatus 10 according to the present invention is shown in fig. 2, and comprises two external layers 12 distanced from each other, between which a plurality of structural elements 13 are interposed, with an oblong development and defining with their thickness the reciprocal distance between the external layers 12.

The external layers 12 and the structural elements 13 together define one or more cavities 14 in which to possibly dispose one or more filling bodies 15.

The external layers 12 can be made of solid wood or derivatives thereof, for example plywood, chipboard, LDF, MDF, HDF or other derivatives of wood, although a possible application of plastic material is not excluded.

The structural elements 13, in the case shown in fig. 2, strips, are glued or constrained with suitable attachment means such as nails, screws, pins or suchlike, to surfaces 17, internal during use, of the external layers 12.

In particular, in the form of embodiment shown in fig. 2, the structural elements 13 are disposed both in proximity to lateral bands of the surfaces 17, internal during use, so as to define perimeter edges 16 of the panel 11, and also in correspondence to central bands of the surfaces 17, internal during use, in order to confer greater structural rigidity on the panel 11. However, it is not excluded that, in other forms of embodiment, the structural elements 13 can be applied only in proximity to the perimeter edges 16 of the panel 11, or according to different dispositions from those shown in fig. 2.

With particular reference to fig. 2, a first pair of structural elements 13 is provided, disposed on opposite sides of the external layers 12, a second pair of structural elements 13 located parallel to each other in a central region of the surfaces 17, internal during use, of the external layers 12, and another structural element 13 located in proximity to the center line of the external layers 12.

The structural elements 13 can have the same sizes in width, although it is not excluded that in other forms of embodiment, for example shown in fig. 2, they may have different widths, also decided according to the particular application of the panel 11.

The structural elements 13 can be made of wood or derivatives thereof, of aluminum or with other metal or polymer materials.

The filling bodies 15 can be made of paper impregnated and with a cell-like structure, pressed cardboard, polyurethane, polystyrene or similar or comparable materials suitable for the purpose.

The apparatus 10 according to the present invention can comprise a reception unit 18 (figs. 1, 3, 4, 5) to receive the structural elements 13 from an apparatus disposed upstream, not shown in the drawings, and configured to obtain and/or supply the structural elements 13 in their finished size.

The reception unit 18 comprises a first transfer device 19 configured to move the structural elements 13 in a first direction of advance D and on a loading plane 26.

The first transfer device 19 can be chosen from a group comprising a rollerway, a conveyor belt, a thruster or traction device, a possible combination of the above, or other similar or comparable members suitable for the purpose.

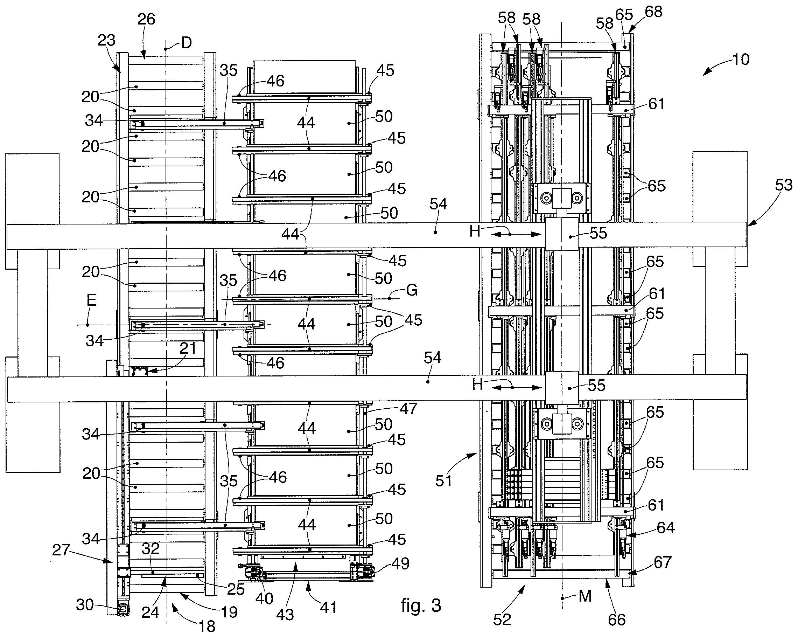

Figs. 3, 4 and 5 are used to describe a possible form of embodiment of the first transfer device 19 which comprises a plurality of motorized rolls 20 disposed in succession to each other in the first direction of advance D, that is, having their axes of rotation located transverse, in this case orthogonal, to the first direction of advance D.

The plurality of motorized rolls 20 substantially defines the loading plane 26 on which the structural elements 13 are disposed and moved.

The motorized rolls 20 can be actuated independently from each other or, in possible forms of embodiment, by a single actuation member 21.

According to some forms of embodiment of the present invention, the actuation member 21 can comprise at least one of either a threaded bar, a rack, gears, a toothed wheel, toothed belts, rod-crank handle mechanisms, electric motors, hydraulic motors or possible combinations thereof.

In the form of embodiment shown in fig. 1, the motorized rolls 20 are supported rotatably, at their ends, by supports provided on a support frame 23.

The reception unit 18 can be provided with an aligner device 24 provided to align the heads of each of the structural elements 13 so as to define their univocal positioning in said first direction of advance D. In particular, when the structural elements 13, loaded on the reception unit 18, are moved by the first transfer device 19 in the first direction of advance D, their translation is intercepted by the aligner device 24 which disposes the heads of the structural elements 13 aligned with each other.

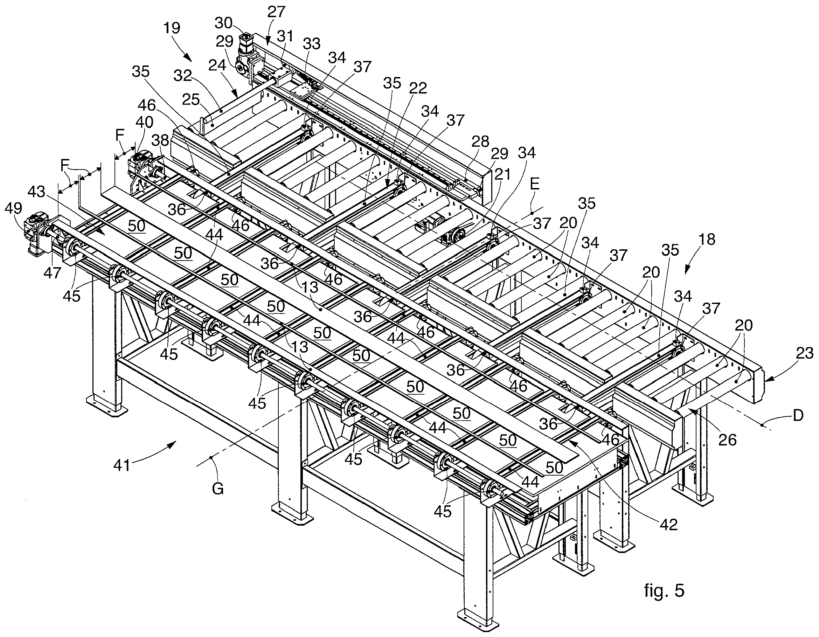

In possible forms of embodiment, for example shown in figs. 1 and 5, the aligner device 24 comprises an abutment element 25, for example a plate or a blade, disposed transversely to the first direction of advance D.

The position of the aligner device 24 can be set manually, for example by attaching the abutment element 25 in a fixed position on the support frame 23 by means of connection means of a substantially known type.

Other forms of embodiment of the present invention can provide that positioning members 27 are associated with the aligner device 24, and are provided to automatically adjust their position in the first direction of advance D.

In possible forms of embodiment, for example shown in fig. 5, the positioning member 27 is configured to move the abutment element 25 in a direction parallel to the first direction of advance D, so as to adjust the heading position of the structural elements 13.

One possible solution can provide that the positioning member 27 can comprise at least one of either a rack mechanism, an electric actuator, a mechanical kinematism, a toothed belt, an electric motor, possible combinations of the above or comparable or similar members suitable for the purpose. In the form of embodiment shown in fig. 5, the positioning member 27 comprises a belt 28, possibly toothed, wound between two pulleys 29 and translatable by means of a first electric motor 30.

In possible implementations, the positioning member 27 is configured to move the aligner device 24 to an active or inactive position for positioning the loading plane 26.

One possible implementation provides that the positioning member 27 provides to lift and lower the abutment element 25 with respect to the loading plane 26 by means of a rotation around an axis, or by translation.

One possible solution, shown in fig. 5, provides that the positioning member 27 comprises a crank handle 31 provided with a first end on which a first side 32 of the abutment element 25 is pivoted, and a second end to which an actuator 33 is connected. Driving the actuator 33 makes the crank handle 31 rotate around its first end and consequently rotates the abutment element 25 around its first side 32.

The reception unit 18 can comprise a second transfer device 22, provided to move the structural elements 13 in a second direction of advance E, transverse to the first direction of advance D, in this case orthogonal.

According to possible forms of embodiment, the second transfer device 22 is configured to move a plurality of structural elements 13 en bloc, preferably but not exclusively the same in number as the structural elements 13 provided for each panel 11 made.

According to possible forms of embodiment of the present invention, the second transfer device 22 comprises at least one of either belts, chains, cables, strips, thruster members, actuators, electric, hydraulic or pneumatic motors, mechanical kinematisms or possible combinations thereof.

In the solution shown in fig. 5, the second transfer device 22 is provided with a plurality of thruster members 34, each of which is mounted on a respective toothed belt 35 installed parallel to the second direction of advance E.

Each toothed belt 35 can be interposed between one of the pairs of motorized rolls 20 and in a position not interfering with the movement of the latter.

Each of the thruster members 34 of a toothed belt 35 is disposed on each occasion in a protruding position with respect to the loading plane 26 and in such a manner as to contact and thrust the structural elements 13 in the second direction of advance E.

Each of the toothed belts 35 winds respectively around a drive pulley 36 and around a driven pulley 37.

The drive pulleys 36 can be mounted on a drive shaft 38 to make them rotate simultaneously.

A second electric motor 40 can be associated with the drive shaft 38 to determine the simultaneous rotation of the drive pulleys 36.

The second transfer device 22 is configured to translate the structural elements 13 toward a preparation unit 41 disposed adjacent to the reception unit 18.

The preparation unit 41 is configured to separate the structural elements 13, arriving en bloc from the reception unit 18, from each other, distancing them reciprocally by determinate distances F in a separation direction G, substantially parallel to the second direction of advance E. The distance F between pairs of structural elements 13 can be variable and not the same for all the pairs of structural elements 13.

The preparation unit 41 can have the function of disposing the structural elements 13 distanced and parallel with respect to each other.

The preparation unit 41 comprises a movement device 42 provided to move the structural elements 13 and determine their separation.

According to possible forms of embodiment of the present invention, the movement device 42 can comprise one or more conveyor belts, belts, chains, vibrating members, suitable to selectively separate the structural elements 13.

Fig. 5 shows a possible solution of the present invention in which the movement device 42 comprises a support plane 43 on which, during use, the structural elements 13 are disposed. The support plane 43 can be disposed substantially coplanar with the loading plane 26 of the reception unit 18.

In possible implementations of the present invention, the support plane 43 is defined by a plurality of substantially flat support plates 50.

Possible forms of embodiment of the present invention, for example shown in fig. 5, can provide that the movement device 42 comprises a plurality of transfer belts 44 disposed slightly protruding from the support plane 43. The belts 44 are disposed with their transfer segments substantially parallel to the separation direction G.

In the form of embodiment in fig. 3, each of the belts 44 is interposed between two support plates 50, so as to determine the transfer of the structural elements 13.

Each of the belts 44 winds around a drive wheel 45 and a driven wheel 46. The drive wheels 45 can be driven independently of each other or, in other solutions for example shown in fig. 5, simultaneously.

According to the form of embodiment shown in fig. 5, the drive wheels 45 are mounted on a drive shaft 47 to provide their simultaneous movement.

A third electric motor 49 is connected to the drive shaft 47, to make the belts 44 rotate and to determine the rotation of the drive shaft 47.

According to a possible form of embodiment, to allow to transfer the structural elements 13 from the reception unit 18 to the preparation unit 41, it may be provided that the second transfer device 22 and the movement device 42 are partly overlapping, that is, they co-penetrate each other in the separation direction G.

One possible implementation of the invention can provide that the end segments of the toothed belts 35 of the second transfer device 22 are disposed adjacent to the end segments of the belts 44 of the movement device 42.

One form of embodiment of the present invention provides that the separation of the structural elements 13 in the preparation unit 41 is achieved by setting a different transfer speed of the second transfer device 22 with respect to that of the movement device 42.

In particular, the movement device 42 transfers the structural elements 13 more quickly than the second transfer device 22, in this way generating a reciprocal distancing of the structural elements 13.

The transfer device 22 can be configured to be activated continuously or intermittently to obtain the effect of distancing the structural elements 13.

A gripping and delivery unit 51 is provided to pick up the structural elements 13 present on the preparation unit 41 and to deliver them to an assembly unit 52 on which at least one of the external layers 12 that make up the panel 11 is disposed.

In particular, the gripping and delivery unit 51 is configured to order the structural elements 13 distanced in a predetermined manner and to dispose the structural elements 13 on the external layer 12 in the predefined positions.

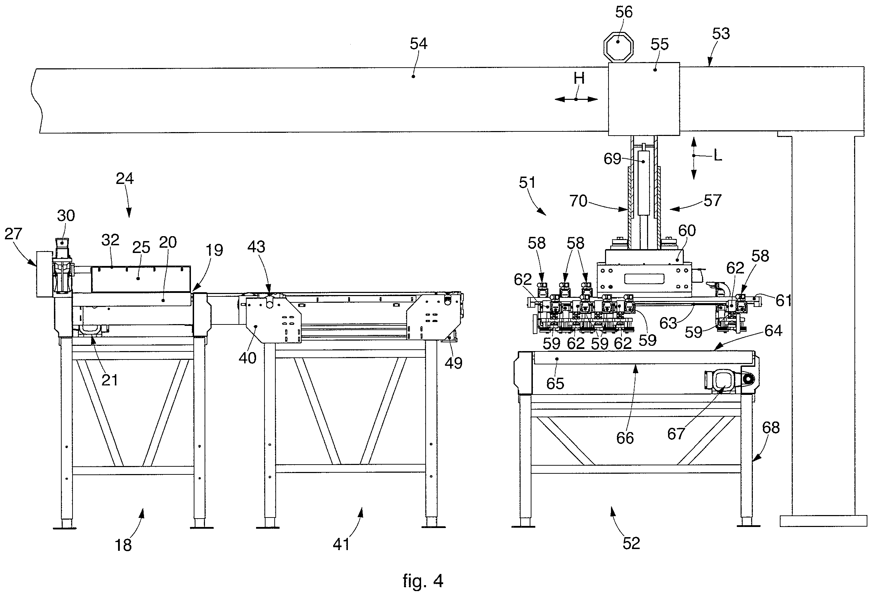

In some solutions, shown for example in fig. 4, the gripping and delivery unit 51 is mobile in a first position in which it is configured to pick up the structural elements 13 from the preparation unit 41, and a second position in which it is configured to deliver the structural elements 13 to the assembly unit 52.

In possible implementations, for example shown in fig. 4, the gripping and delivery unit 51 is selectively movable, above the preparation unit 41 and the assembly unit 52, by means of a gate structure 53 or a bridge crane.

In the solution in fig. 4, the gate structure 53 comprises guide beams 54 that extend for the length of the preparation unit 41 and the assembly unit 52, and on which a slider 55 is selectively movable.

The slider 55 is connected to the gripping and delivery unit 51 and is configured to move the latter to its first and second position.

A fourth electric motor 56 can be connected to the slider 55 to move it along the guide beams 54.

In the form of embodiment in fig. 4, the gripping and delivery unit 51 is mobile in a movement direction H, substantially parallel to the separation direction G and the second direction of advance E.

In possible solutions, the gripping and delivery unit 51 is movable toward/ away from the loading plane 26 and the support plane 43 in an approach/ distancing direction L.

One possible solution of the present invention provides that the gripping and delivery unit 51 is associated to a movement member 57 provided to move the gripping and delivery unit 51 with respect to the gate structure 53 in the approach/distancing direction L.

One possible solution, shown in fig. 4, provides that the movement member 57 comprises actuators 69 and guide and sliding means 70, provided to allow the movement of the gripping and delivery unit 51 in the approach/distancing direction L.

One possible implementation of the present invention, shown for example in fig. 4, provides that the guide and sliding means 70 comprise tubular elements positioned sliding one inside the other.

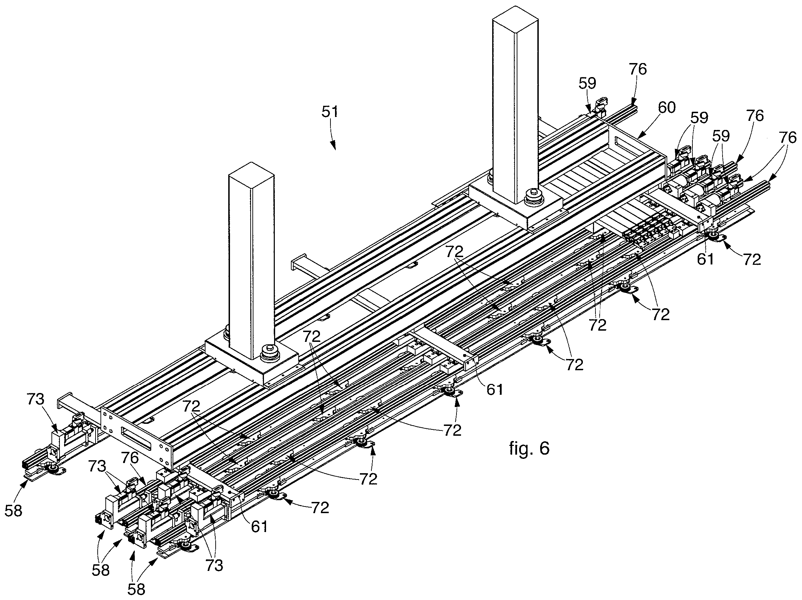

Possible solutions of the present invention, for example shown in figs. 6-8, provide that the gripping and delivery unit 51 is provided with a plurality of gripping units 58 each of which is configured to pick up, for example by gripping, one or more of the structural elements 13 present in the preparation unit 41 and to make them available to the assembly unit 52.

According to some solutions, the gripping units 58 can be positioned adjacent to each other and according to a substantially parallel disposition, so as to take and keep the structural elements 13 substantially parallel to each other during the transfer.

In particular, the gripping units 58 can be positioned adjacent to each other in a direction transverse to the oblong development of the structural elements 13.

According to possible solutions of the present invention, the gripping units 58 are configured to pick up at least one of the structural elements 13 from the preparation unit 41 and to deliver the structural elements 13 to the assembly unit 52. In the delivery step of the structural elements 13, the gripping units 58 are configured to dispose the structural elements 13 on the external layer 12 distanced from each other at the pre-established distances N. The pre-established distances N can be equal or different between pairs of structural elements 13.

Possible implementations of the invention provide that the gripping and delivery unit 51 comprises a support body 60 on which the gripping units 58 are mounted.

According to possible solutions, the gripping and delivery unit 51 comprises positioning members 59 provided to move the gripping units 58 reciprocally nearer/away from each other in order to define the pre-established distances N. The positioning members 59 allow to define precisely the reciprocal distance between adjacent structural elements 13, so that, when transferring between the preparation unit 41 and the assembly unit 52, the structural elements 13 are already reciprocally positioned in the position that they will assume on the external layer 12.

According to possible solutions of the present invention, the support body 60 is connected to the movement member 57.

In possible solutions of the invention, the support body 60 comprises at least one guide 61 with an oblong development in the movement direction H and on which the gripping units 58 are slidingly mounted.

Each of the gripping units 58 is moved, independently from the others, along the guide 61 by the respective positioning member 59.

The positioning member 59 can comprise at least one of either an electric motor, a rack mechanism, a gear mechanism, a toothed belt, a chain, a worm screw mechanism or similar or comparable mechanical members suitable for the purpose.

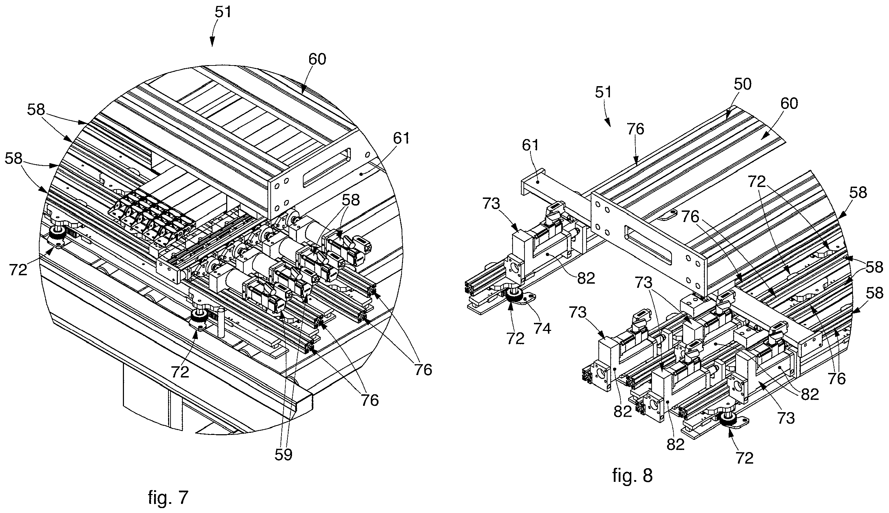

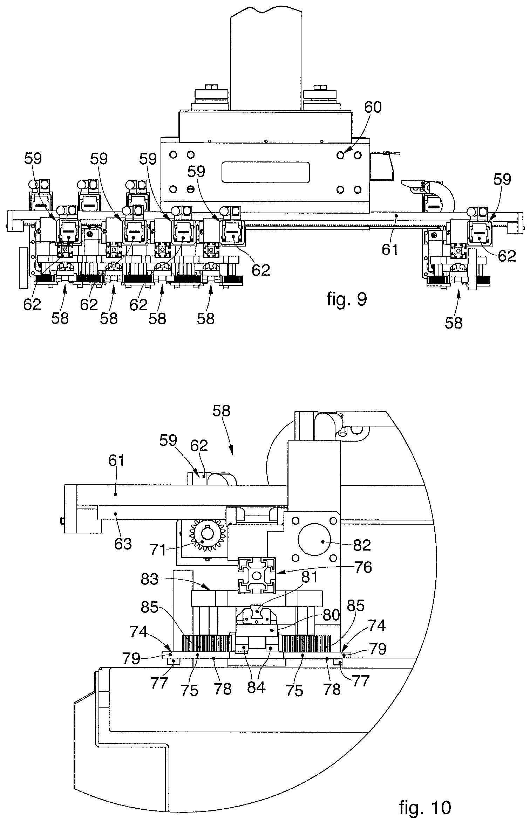

In the form of embodiment shown in figs. 7, 9 and 10, each positioning member 59 comprises a fifth electric motor 62 to which a toothed wheel 71 is connected (fig. 10), suitable to engage on a rack 63 mounted parallel to the guide 61.

Possible solutions of the present invention provide that the gripping unit 58 comprises at least one gripper 72 configured to pick up at least one of the structural elements 13.

Some implementations provide that each gripping unit 58 has an oblong development and is configured to pick up one or more of the structural elements 13 at several points along its longitudinal extension.

According to possible solutions, for example shown in figs. 7 - 10, each gripping unit 58 is provided with a plurality of grippers 72, disposed distanced from each other along the length of each gripping unit 58.

Possible implementations of the present invention provide that the grippers 72 of each gripping unit 58 are mounted on a respective support structure 76.

The support structure 76 is connected to the positioning members 59 to allow them to translate along the guide 61.

The movement of the support structure 76 allows to suitably position each gripping unit 58 so as to allow the structural elements 13 to be picked up from the preparation unit 41.

When the gripping and delivery unit 51 moves into correspondence with the assembly unit 52, the gripping units 58 are reciprocally distanced from each other so as to position the structural elements 13 distanced from each other by the pre-established distances N, corresponding to the positions that they have to assume on the external layer 12.

According to possible solutions, it is advantageous to provide that the reciprocal positioning of the gripping units 58 takes place in the passage of the gripping and delivery unit 51 between the preparation unit 41 and the assembly unit 52. This solution allows to reduce the downtimes of the process of making the panel 11.

To this purpose, in possible solutions, it may be provided that the positioning members 59 of the gripping units 58 and at least the fourth motor 56 for moving the slider 55 are controlled, for example by a management and control unit, in order to coordinate their simultaneous movement.

Activation/de-activation members 73 are provided to determine the actuation or the de-activation of the gripper 72 to allow the structural element 13 to be gripped and respectively released.

In possible solutions, the activation/de-activation members 73 are configured to determine the simultaneous activation/de-activation of all the grippers 72 associated to a gripping unit 58, although it is not excluded that, in other solutions, the grippers 72 are actuated independently from each other.

Possible forms of embodiment provide that each of the grippers 72 comprises two gripping elements 74, cooperating with each other by means of the activation/de-activation members 73, to allow the structural elements 13 to be gripped between them.

With reference to the form of embodiment shown in figs. 6 - 12, the gripping elements 74 of each gripper 72 comprise two shaped plates 75 disposed adjacent to each other and pivoted with their first ends 78 to the support structure 76 of the corresponding gripping unit 58.

Second free ends 79 of each shaped plate 75 are provided with respective gripping portions 77, in this case configured as a pin, and connected protruding to the shaped plate 75.

By making the shaped plates 75 rotate, it is possible to selectively move the respective gripping portions 77 nearer to/away from each other, in order to guarantee the grip or release of the structural element 13.

The rotation of the shaped plates 75 around the first end 78 is determined by the activation/de-activation members 73 connected thereto.

One form of embodiment of the present invention provides that the activation/ de-activation members 73 comprise a linear movement device 82 and motion conversion members 83, provided to convert the linear motion of the linear movement device 82 to a rotational motion of the gripping elements 74.

The linear movement devices 82 can comprise electric or pneumatic actuators, screw jacks, mechanical kinematisms or possible combinations thereof.

In a possible form of embodiment, for example shown in figs. 10-12, the motion conversion members 83 comprise a sliding bar 80 connected to the linear movement devices 82 and mounted on a guide body 81 of the support structure 76.

Two rack-type toothed portions 84, solidly mobile with the sliding bar, are mounted on said sliding bar 80 on opposite sides.

The toothed portions 84 are configured to engage with respective toothed crowns 85 each solidly associated with a respective gripping element 74 of a gripper 72.

In particular, when the linear movement devices 82 are actuated, the sliding bar 80 is translated with respect to the guide body 81. The translation of the sliding bar 80 determines a consequent translation of the toothed portions 84.

The translation of the toothed portions 84 in turn determines the rotation of the toothed crowns 85 and therefore the simultaneous rotation of the gripping elements 74 solidly associated therewith, so as to activate/de-activate the gripper 72.

Adjustment devices 86 are associated with the gripper 72 to control the intensity with which the structural elements 13 are gripped by the gripping elements 74.

The adjustment devices 86 can comprise damping elements, elastic elements, such as pistons, springs or possible combinations thereof.

In possible implementations, the adjustment devices 86 comprise a piston 87 elastically controlled by a spring, not visible in the drawings, which cooperates during use with a single portion of the sliding bar 80.

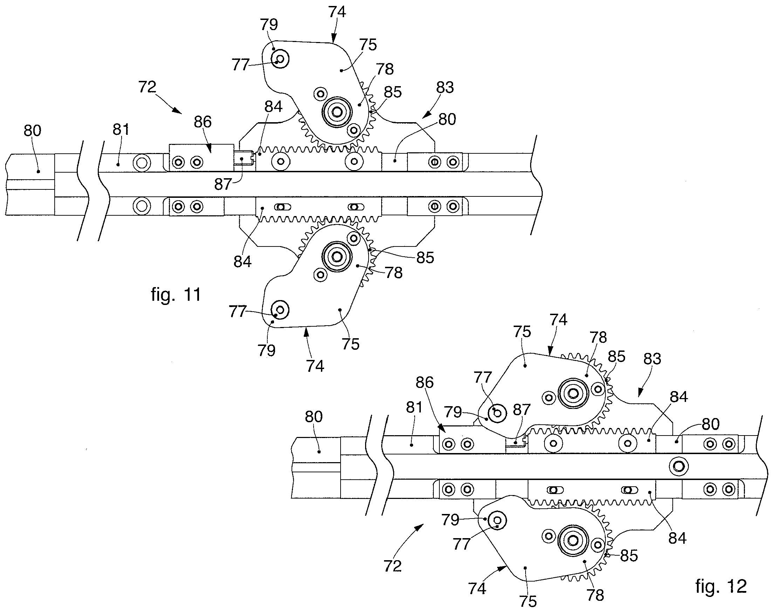

In a possible solution of the present invention, for example shown in figs. 11 and 12, the adjustment devices are configured to act only on one of the two toothed portions 84. The toothed portion 84 on which the adjustment devices 86 act are selectively translatable, for example by the guiding action of a pin and an eyelet, along the extension of the guide. This solution allows to define, with regard to the gripping element 74 that does not cooperate with the adjustment devices 86, a univocal reference of the structural element 13.

In the solution shown in figs. 11 and 12, the adjustment devices 86 are mounted solid with the guide body 81 and intercept the movement of the toothed portions 84.

With reference to figs. 1, 3 and 4, the assembly unit 52 comprises at least a support plane 64 on which, during use, at least one of the external layers 12 is disposed. The external layer 12 disposed on the support plane 64 can be provided, on its surface 17 which is internal during use, with a layer of adhesive material, such as polyurethane or vinyl glues, to allow the subsequent connection of the structural elements 13.

The support plane 64 can be provided with loading and unloading devices 66 configured to load the external layers 12 on the support plane 64 and to unload them once the structural elements 13 have been connected on them.

In possible implementations of the present invention, the loading and unloading device 66 is configured to move the external layers 12 in a loading and unloading direction M (fig. 3). Possible implementations of the present invention provide that the work direction M is substantially parallel to the first direction of advance D.

The loading and unloading devices 66 can be chosen from a group comprising a rollerway, a conveyor belt, a thrust device or a traction device, a possible combination of the above or other similar or comparable members suitable for the purpose.

In a possible solution, for example shown in figs. 1, 3 and 4, the loading and unloading devices 66 comprise a plurality of cylinders 65 or rolls, located in succession to each other and reciprocally distanced in the work direction M.

Some solutions of the present invention provide that the cylinders 65 have their axis of rotation substantially orthogonal to the loading and unloading direction M.

Drive members 67 are provided to make the cylinders 65 rotate, autonomously or simultaneously.

The drive members 67 can comprise at least one of either a threaded bar, a rack, gears, a toothed wheel, toothed belts, rod and crank handle mechanisms, electric or hydraulic motors or possible combinations thereof.

In the form of embodiment shown in fig. 4, the cylinders 65 are supported rotatably at their ends by supports provided on a support frame 68 of the assembly unit 52.

It is clear that modifications and/or additions of parts may be made to the apparatus 10 for making panels 11 and the corresponding method as described heretofore, without departing from the field and scope of the present invention.

It is also clear that, although the present invention has been described with reference to some specific examples, a person of skill in the art shall certainly be able to achieve many other equivalent forms of apparatus 10 for making panels 11 and the corresponding method, having the characteristics as set forth in the claims and hence all coming within the field of protection defined thereby.

## Claims

1. Apparatus for making a panel (11) comprising at least one external layer (12) on which structural elements (13) with an oblong development are disposed, distanced from each other at pre-established distances (N), wherein said apparatus comprises:
- a preparation unit (41) provided to divide said structural elements (13), distancing them from each other;
- an assembly unit (52) on which to dispose said external layer (12) during use;
- a gripping and delivery unit (51), mobile between said preparation unit (41) and said assembly unit (52) and comprising a plurality of gripping units (58) each of which is configured to pick up at least one of said structural elements (13) from said preparation unit (41) and to deliver said structural elements (13) to said assembly unit (52), disposing them on said external layer (12) distanced from each other at said pre-established distances (N), **characterized in that** said gripping and delivery unit (51) also comprises positioning members (59) provided to move said gripping units (58) reciprocally nearer/away from each other in order to define said pre-established distances (N) of said structural elements (13).

2. Apparatus as in claim 1, **characterized in that** said gripping and delivery unit (51) comprises a support body (60) on which said gripping units (58) are mounted.

3. Apparatus as in claim 2, **characterized in that** said support body (60) comprises at least one guide (61) on which said gripping units (58) are mounted.

4. Apparatus as in any claim hereinbefore, **characterized in that** each gripping unit (58) comprises at least one gripper (72) configured to pick up at least one of said structural elements (13).

5. Apparatus as in claim 3 and 4, **characterized in that** said grippers (72) of each gripping unit (58) are mounted on respective support structures (76), **and in that** said positioning members (59) are connected to said support structures (76) and to said gripping units (58) to allow the translation of said gripping units (58) along said guide (61).

6. Apparatus as in claim 4 or 5, **characterized in that** said gripping unit (58) comprises activation/de-activation members (73) configured to activate or deactivate said gripper (72).

7. Apparatus as in claim 6, **characterized in that** said gripper (72) comprises two gripping elements (74) connected to said activation/de-activation members (73), **and in that** said activation/de-activation members (73) comprise a linear movement device (82) and motion conversion members (83) configured to convert the linear motion of said linear movement device (82) into a rotatory motion of said gripping elements (74).

8. Apparatus as in any claim hereinbefore, **characterized in that** said gripping and delivery unit (51) is mounted on a gate structure (53) configured to move the gripping and delivery unit (51) between said preparation unit (41) and said assembly unit (52).

9. Apparatus as in any claim hereinbefore, **characterized in that** said preparation unit (41) comprises a movement device (42) configured to move said structural elements (13) and determine their separation along a direction of separation (G).

10. Apparatus as in claim 9, **characterized in that** said movement device (42) comprises a plurality of transfer belts (44) disposed protruding with respect to a support plane (43), said belts (44) being disposed with their transfer segments substantially parallel to said direction of separation (G).

11. Apparatus as in any claim hereinbefore, **characterized in that** it comprises a reception unit (18) located upstream of said preparation unit (41) and configured to receive said structural elements (13) en bloc and transfer them to said preparation unit (41).

12. Apparatus as in claim 11, **characterized in that** said reception unit (18) comprises a first transfer device (19) configured to move the structural elements (13) in a first direction of advance (D).

13. Apparatus as in claim 12, **characterized in that** said reception unit (18) is provided with an aligner device (24) provided to align the heads of said structural elements (13) and define their univocal positioning in said first direction of advance (D).

14. Apparatus as in claim 12 or 13, **characterized in that** said reception unit (18) comprises a second transfer device (22) configured to move the structural elements (13) in a second direction of advance (E), transverse to said first direction of advance (D) and toward said preparation unit (41).

15. Apparatus as in claim 14, **characterized in that** said second transfer device (22) is provided with a plurality of thruster members (34) each of which is mounted on a respective toothed belt (35) installed parallel to the second direction of advance (E).

16. Apparatus as in claim 9 or 10 and 14 or 15, **characterized in that** said second transfer device (22) and said movement device (42) are partly overlapping in the direction of separation (G).

17. Method for making a panel (11) comprising at least one external layer (12) on which structural elements (13) with an oblong development are disposed, distanced from each other at pre-established distances (N), wherein said method comprises:
- preparing said structural elements (13) by a preparation unit (41) in order to separate and divide said structural elements (13) with respect to each other;
- disposing said external layer (12) on an assembly unit (52);
**characterized in that** it comprises picking up said structural elements (13) from said preparation unit (41) and delivering them to said assembly unit (52) by means of a plurality of gripping units (58) of a gripping and delivery unit (51), disposing said structural elements (13) on said external layer (12) distanced from each other at said pre-established distances (N).

18. Method as in claim 17, **characterized in that** said gripping and delivery unit (51) is moved between said preparation unit (41) and said assembly unit (52) **and in that** during said movement said gripping units (58) are moved to dispose said structural elements (13) distanced from each other at said pre-established distances (N).

19. Method as in claim 17 or 18, **characterized in that** it comprises receiving en bloc a plurality of structural elements (13) by a reception unit (18) and transferring said structural elements (13) to said preparation unit (41).

## Patentansprüche

1. Vorrichtung zum Herstellen einer Platte (11), umfassend mindestens eine äußere Schicht (12), auf der Strukturelemente (13) mit einer Längsausrichtung angeordnet sind, die in vorbestimmten Abständen (N) voneinander beabstandet sind, wobei die Vorrichtung umfasst:
- eine Vorbereitungseinheit (41), die zum Aufteilen der Strukturelemente (13) vorgesehen ist, indem sie sie voneinander beabstandet;
- eine Montageeinheit (52), auf der die äußere Schicht (12) während der Verwendung anzuordnen ist;
- eine Greif- und Übergabeeinheit (51), die zwischen der Vorbereitungseinheit (41) und der Montageeinheit (52) beweglich ist und eine Vielzahl von Greifeinheiten (58) umfasst, von denen jede dazu konfiguriert ist, mindestens eines der Strukturelemente (13) von der Vorbereitungseinheit (41) aufzunehmen und die Strukturelemente (13) an die Montageeinheit (52) zu übergeben, indem sie sie auf der äußeren Schicht (12) in den vorbestimmten Abständen (N) voneinander beabstandet anordnet, **dadurch gekennzeichnet, dass** die Greif- und Übergabeeinheit (51) auch Positionierungselemente (59) umfasst, die dazu vorgesehen sind, die Greifeinheiten (58) zueinander und voneinander weg hin und her zu bewegen, um die vorbestimmten Abstände (N) der Strukturelemente (13) zu definieren.

2. Vorrichtung gemäß Anspruch 1, **dadurch gekennzeichnet, dass** die Greif- und Übergabeeinheit (51) einen Stützkörper (60) umfasst, auf dem die Greifeinheiten (58) montiert sind.

3. Vorrichtung gemäß Anspruch 2, **dadurch gekennzeichnet, dass** der Stützkörper (60) mindestens eine Führung (61) umfasst, auf der die Greifeinheiten (58) montiert sind.

4. Vorrichtung gemäß einem der vorhergehenden Ansprüche, **dadurch gekennzeichnet, dass** jede Greifeinheit (58) mindestens einen Greifer (72) umfasst, der dazu konfiguriert ist, mindestens eines der Strukturelemente (13) aufzunehmen.

5. Vorrichtung gemäß Anspruch 3 und 4, **dadurch gekennzeichnet, dass** die Greifer (72) jeder Greifeinheit (58) auf entsprechenden Stützstrukturen (76) montiert sind, und dass die Positionierungselemente (59) mit den Stützstrukturen (76) und den Greifeinheiten (58) verbunden sind, um das Verfahren der Greifeinheiten (58) entlang der Führung (61) zu ermöglichen.

6. Vorrichtung gemäß Anspruch 4 oder 5, **dadurch gekennzeichnet, dass** die Greifeinheit (58) Aktivierungs-und Deaktivierungselemente (75) umfasst, die dazu konfiguriert sind, den Greifer (72) zu aktivieren bzw. zu deaktivieren.

7. Vorrichtung gemäß Anspruch 6, **dadurch gekennzeichnet, dass** der Greifer (72) zwei Greifelemente (74) umfasst, die mit den Aktivierungs- und Deaktivierungselementen (73) verbunden sind, und dass die Aktivierungs-und Deaktivierungselemente (73) eine Linearbewegungsvorrichtung (82) und Bewegungsumwandlungselemente (83) umfassen, die dazu konfiguriert sind, die Linearbewegung der Linearbewegungsvorrichtung (82) in eine Drehbewegung der Greifelemente (74) umzuwandeln.

8. Vorrichtung gemäß einem der vorhergehenden Ansprüche, **dadurch gekennzeichnet, dass** die Greif- und Übergabeeinheit (51) auf einer Portalstruktur (53) montiert ist, die dazu konfiguriert ist, die Greif- und Übergabeeinheit (51) zwischen der Vorbereitungseinheit (41) und der Montageeinheit (52) zu bewegen.

9. Vorrichtung gemäß einem der vorhergehenden Ansprüche, **dadurch gekennzeichnet, dass** die Vorbereitungseinheit (41) eine Bewegungsvorrichtung (42) umfasst, die dazu konfiguriert ist, die Strukturelemente (13) zu bewegen und ihre Teilung entlang einer Teilungsrichtung (G) zu bestimmen.

10. Vorrichtung gemäß Anspruch 9, **dadurch gekennzeichnet, dass** die Bewegungsvorrichtung (42) eine Vielzahl von Übertragungsbändern (44) umfasst, die so angeordnet sind, dass sie bezüglich einer Stützebene (43) vorstehen, wobei die Bänder (44) so angeordnet sind, dass ihre Übertragungssegmente im Wesentlichen parallel zur Teilungsrichtung (G) sind.

11. Vorrichtung gemäß einem der vorhergehenden Ansprüche, **dadurch gekennzeichnet, dass** sie eine Aufnahmeeinheit (18) umfasst, die der Vorbereitungseinheit (41) vorgeschaltet angeordnet und dazu konfiguriert ist, die Strukturelemente (13) im Ganzen aufzunehmen und sie zur Vorbereitungseinheit (41) zu übertragen.

12. Vorrichtung gemäß Anspruch 11, **dadurch gekennzeichnet, dass** die Empfangseinheit (18) eine erste Übertragungsvorrichtung (19) umfasst, die dazu konfiguriert ist, die Strukturelemente (13) in einer ersten Fortbewegungsrichtung (D) zu bewegen.

13. Vorrichtung gemäß Anspruch 12, **dadurch gekennzeichnet, dass** die Empfangseinheit (18) mit einer Ausrichtungsvorrichtung (24) ausgestattet ist, die dazu vorgesehen ist, die Köpfe der Strukturelemente (13) auszurichten und ihre eindeutige Positionierung in der ersten Fortbewegungsrichtung (D) zu definieren.

14. Vorrichtung gemäß Anspruch 12 oder 13, **dadurch gekennzeichnet, dass** die Empfangseinheit (18) eine zweite Übertragungsvorrichtung (22) umfasst, die dazu konfiguriert ist, die Strukturelemente (13) in einer zweiten Fortbewegungsrichtung (E) quer zur ersten Fortbewegungsrichtung (D) und zur Vorbereitungseinheit (41) hin zu bewegen.

15. Vorrichtung gemäß Anspruch 14, **dadurch gekennzeichnet, dass** die zweite Übertragungsvorrichtung (22) mit einer Vielzahl von Schubelementen (34) ausgestattet ist, von denen jedes auf einem entsprechenden Zahnriemen (35) montiert ist, der parallel zur zweiten Fortbewegungsrichtung (E) installiert ist.

16. Vorrichtung gemäß Anspruch 9 oder 10 und 14 oder 15, **dadurch gekennzeichnet, dass** die zweite Übertragungsvorrichtung (22) und die Bewegungsvorrichtung (42) sich in der Teilungsrichtung (G) teilweise überlappen.

17. Verfahren zum Herstellen einer Platte (11), umfassen mindestens eine äußere Schicht (12), auf der Strukturelemente (13) mit einer Längsausrichtung angeordnet sind, die in vorbestimmten Abständen (N) voneinander beabstandet sind, wobei das Verfahren umfasst:
- Vorbereiten der Strukturelemente (13) durch eine Vorbereitungseinheit (41) zum Trennen und Aufteilen der Strukturelemente (13) mit Bezug zueinander;
- Anordnen der äußeren Schicht (12) auf einer Montageeinheit (52);
**dadurch gekennzeichnet, dass** es umfasst: Aufnehmen der Strukturelemente (13) von der Vorbereitungseinheit (41) und Liefern von diesen an die Montageeinheit (52) mittels einer Vielzahl von Greifeinheiten (58) einer Greif- und Übergabeeinheit (51), Anordnen der Strukturelemente (13) auf der äußeren Schicht (12) um die vorbestimmten Abstände (N) voneinander beabstandet.

18. Verfahren gemäß Anspruch 17, **dadurch gekennzeichnet, dass** die Greif- und Übergabeeinheit (51) zwischen der Vorbereitungseinheit (41) und der Montageeinheit (52) bewegt wird und dass während der Bewegung die Greifeinheiten (58) bewegt werden, um die Strukturelemente (13) in den vorbestimmten Abständen voneinander beabstandet anzuordnen.

19. Verfahren gemäß Anspruch 17 oder 18, **dadurch gekennzeichnet, dass** es umfasst: Empfangen einer Vielzahl von Strukturelementen (13) im Ganzen durch eine Empfangseinheit (18) und Übertragen der Strukturelemente (13) auf die Vorbereitungseinheit (41).

## Revendications

1. Appareil pour la fabrication d'un panneau (11) comportant au moins une couche extérieure (12) sur laquelle des éléments structurels (13) se développant en longueur sont disposés, éloignés les uns des autres à des distances préétablies (N), ledit appareil comprenant :
- une unité de préparation (41) prévue pour diviser lesdits éléments structurels (13), en les éloignant les uns des autres ;
- une unité d'assemblage (52) sur lequel ladite couche extérieure doit être disposée (12) lors de l'utilisation ;
- une unité de préhension et de distribution (51), mobile entre ladite unité de préparation (41) et l'unité d'assemblage (52) et comprenant une pluralité d'unités de préhension (58) dont chacune est configurée pour saisir au moins un des éléments structurels (13) depuis ladite unité de préparation (41), et pour fournir lesdits éléments structurels (13) à ladite unité d'assemblage (52), en les disposant sur ladite couche extérieure (12) éloignés les uns des autres à des distances préétablies (N), **caractérisé en ce que** ladite unité de préhension et de distribution (51) comprend également des organes de positionnement (59) prévus pour déplacer lesdites unités de saisie (58) en va-et-vient pour les rapprocher/éloigner les uns des autres afin de définir lesdites distances préétablies (N) desdits éléments structurels (13).

2. Appareil selon la revendication 1, **caractérisé en ce que** ladite unité de préhension et de distribution (51) comprend un corps de support (60) sur lequel lesdites unités de préhension (58) sont montées.

3. Appareil selon la revendication 2, **caractérisé en ce que** ledit corps de support (60) comprend au moins un guide (61) sur lequel lesdites unités de préhension (58) sont montées.

4. Appareil selon n'importe laquelle des revendications précédentes, **caractérisé en ce que** chaque unité de préhension (58) comprend au moins une pince (72) conçue pour saisir au moins l'un des lesdits éléments structurels (13).

5. Appareil selon les revendication 3 et 4, **caractérisé en ce que** lesdites pinces (72) de chaque unité de préhension (58) sont montées sur des structures d'appui respectifs (76), et **en ce que** lesdits organes de positionnement (59) sont reliés auxdites structures de soutien (76) et auxdites unités de préhension (58) afin de permettre la translation desdites unités de préhension (58) le long dudit guide (61).

6. Appareil selon la revendication 4 ou 5, **caractérisé en ce que** ladite unité de préhension (58) comprend des organes d'activation/désactivation (73) conçus pour activer ou désactiver ladite pince (72).

7. Appareil selon la revendication 6, **caractérisé en ce que** ladite pince (72) comprend deux éléments de préhension (74) reliés auxdits organes d'activation/désactivation (73), et **en ce que** lesdits organes d'activation/désactivation (73) comprennent un dispositif de déplacement linéaire (82) et des organes de conversion de mouvement (83) conçus pour convertir le mouvement linéaire dudit dispositif de mouvement linéaire dit (82) en mouvement rotatif desdits élément de préhension (74).

8. Appareil selon n'importe laquelle des revendication précédentes, **caractérisé en ce que** ladite unité de préhension et de distribution (51) est montée sur une structure à portique (53) conçue pour déplacer l'unité de préhension et de distribution (51) entre ladite unité de préparation (41) et ladite unité d'assemblage (52).

9. Appareil selon n'importe laquelle des revendications précédentes, **caractérisé en ce que** ladite unité de préparation (41) comprend un dispositif de déplacement (42) conçu pour déplacer lesdits éléments structurels (13) et déterminer leur séparation le long d'une direction de séparation (G).

10. Appareil selon la revendication 9, **caractérisé en ce que** ledit dispositif de déplacement (42) comprend une pluralité de courroies de transfert (44) faisant saillie par rapport à un plan d'appui (43), lesdites courroies (44) étant agencées avec leurs segments de transfert sensiblement parallèles à ladite direction de séparation (G).

11. Appareil selon n'importe laquelle des revendications précédentes, **caractérisé en ce qu'**il comprend une unité de réception (18) située en amont de ladite unité de préparation (41) et conçue pour recevoir lesdits éléments structurels (13) en bloc et pour les transférer à ladite unité de préparation (41).

12. Appareil selon la revendication 11, **caractérisé en ce que** ladite unité de réception (18) comprend un premier dispositif de transfert (19) conçu pour déplacer les éléments structurels (13) le long d'une première direction d'avance (D).

13. Appareil selon la revendication 12, **caractérisé en ce que** ladite unité de réception (18) est pourvue d'un dispositif d'alignement (24) prévu pour aligner les têtes desdits éléments structurels (13) et pour définir leur positionnement univoque dans ladite première direction d'avance (D).

14. Appareil selon la revendication 12 ou 13, **caractérisé en ce que** ladite unité de réception (18) comprend un deuxième dispositif de transfert (22) conçu pour déplacer les éléments structurels (13) le long d'une deuxième direction d'avance (E), transversale à ladite première direction d'avance (D) et vers ladite unité de préparation (41).

15. Appareil selon la revendication 14, **caractérisé en ce que** ledit deuxième dispositif de transfert (22) est pourvu d'une pluralité d'organes de poussée (34) dont chacun est monté sur une courroie crantée respective (35) installée parallèlement à la deuxième direction d'avance (E).

16. Appareil selon la revendication 9 ou 10 et 14 ou 15, **caractérisé en ce que** ledit deuxième dispositif de transfert (22) et ledit dispositif de déplacement (42) sont partiellement superposés le long de la direction de séparation (G).

17. Procédé de fabrication d'un panneau (11) comportant au moins une couche extérieure (12) sur laquelle des éléments structurels (13) se développant en longueur sont disposés, éloignés les uns des autres à des distances préétablies (N), ledit procédé comprenant les étapes consistant à :
- préparer lesdits éléments structurels (13) au moyen d'une unité de préparation (41) afin de séparer et de diviser lesdits éléments structurels (13) les uns des autres ;
- disposer ladite couche extérieure (12) sur une unité d'assemblage (52) ;
**caractérisé en ce qu'**il comprend les étapes consistant à prélever lesdits éléments structurels (13) de ladite unité de préparation (41) et les fournir à ladite unité d'assemblage (52), au moyen d'une pluralité d'unités de préhension (58) d'une unité de préhension et de distribution (51), disposer lesdits éléments structurels (13) sur ladite couche extérieure (12) éloignés les uns des autres auxdites distances préétablies (N).

18. Procédé selon la revendication 17, **caractérisé en ce que** ladite unité de préhension et de distribution (51) est déplacée entre ladite unité de préparation (41) et ladite unité d'assemblage (52) et **en ce que**, pendant ledit déplacement, lesdites unités de préhension (58) sont déplacées pour disposer lesdits éléments structurels (13) éloignés les uns des autres auxdites distances préétablies (N).

19. Procédé selon la revendication 17 ou 18, **caractérisé en ce qu'**il comprend les étapes consistant à recevoir en bloc une pluralité d'éléments structurels (13) au moyen d'une unité de réception (18) et de transférer lesdits éléments structurels (13) à ladite unité de préparation (41).
